# EUROPÄISCHE PATENTSCHRIFT

(11) **EP 3 204 718 B1**
(45) Veröffentlichungstag und Bekanntmachung des Hinweises auf die Patenterteilung: **11.07.2018**
(21) Anmeldenummer: 15798307.3
(22) Anmeldetag: 09.10.2015
(51) Int. Cl.: G01B 11/26, B21D 5/00

(54) **BIEGEWINKEL-MESSVORRICHTUNG**
BENDING ANGLE MEASURING DEVICE
DISPOSITIF DE MESURE D'ANGLE DE CINTRAGE

(30) Priorität: 09.10.2014 AT 507222014
(43) Veröffentlichungstag der Anmeldung: 16.08.2017
(73) Patentinhaber: TRUMPF Maschinen Austria GmbH & Co. KG., 4061 Pasching (AT)
(72) Erfinder: ANGERER, Gerhard, A-4203 Altenberg (AT); FREUDENTHALER, Klemens, A-4020 Linz (AT); HAUSMANN, Florian, A-4050 Traun (AT); HÖRL, Matthias, 4020 Linz (AT); INFANGER, Verena, A-4020 Linz (AT); KOVJENIC, Nenad, A-4040 Linz (AT); MAIER, Florian, A-4060 Leonding (AT); THEIS, Helmut, A-4540 Pfarrkirchen (AT); WALDHERR, Manfred, A-4040 Linz (AT)
(74) Vertreter: Burger, Hannes
(86) Internationale Anmeldenummer: PCT/AT2015/050252
(87) Internationale Veröffentlichungsnummer: WO 2016/054670

(56) Entgegenhaltungen:
- WO-A1-2013/006109
- DE-A1- 3 404 396
- US-B1- 6 373 557

## Beschreibung

Bei Biegeumformungen, wie sie beispielsweise in einer Gesenkbiegemaschine oder einer Schwenkbiegemaschine durchgeführt werden, hängt die Genauigkeit der erzielbaren Biegeumformung neben den geometrischen Abmessungen der Biegewerkzeuge, besonders von den Materialeigenschaften des umzuformenden Bleches ab. Dazu wird nach einem mathematischen Modell der Biegeumformung und unter Berücksichtigung der Materialeigenschaften, eine Soll-Eindringtiefe des Biegestempels in das Biegegesenk bzw. ein Soll-Verschwenkwinkel der Schwenkwange ermittelt. Aufgrund von Schwankungen der Materialeigenschaften, insbesondere der Härte und der Dicke des Materials, werden die nach dem mathematischen Modell ermittelten Biegeparameter für ein aktuell umzuformendes Blech nicht zutreffen, sodass ein, vom gewünschten Soll-Biegewinkel abweichender Ist-Biegewinkel gebogen wird.

Es ist daher von Vorteil, wenn der sich aktuell einstellende Biegewinkel bereits während der Durchführung der Biegeumformung ermittelt werden kann und die Biegeumformung so lange durchgeführt wird, bis der gewünschte Biegewinkel erreicht wird.

Aus dem Stand der Technik sind nun mehrere Vorrichtungen bekannt, bei denen der Biegewinkel während der Durchführung einer Biegeumformung ermittelt wird.

Das Dokument EP 0 993 882 A1 offenbart ein Verfahren und eine Vorrichtung, wonach in einer Aufnahmekammer eines keilförmigen Fortsatzes eines Biegestempels in vertikaler Richtung verstellbare Tastelemente angeordnet sind, deren Tastspitzen die Biegekante des Keilfortsatzes im unbelasteten Zustand, d.h. vor dem Aufsetzen auf den umzuformenden und auf dem Biegegesenk aufliegenden Werkteil, um ein gleiches Maß überragen. Beim Umformvorgang kommt es zu einer Relativverstellung zwischen den Tastelementen, woraus in Echtzeit der Winkel zwischen den Schenkeln ermittelt wird.

Kontaktbehaftete Winkelmessvorrichtungen haben jedoch den Nachteil, dass sie direkt mit dem umzuformenden Werkstück in Kontakt kommen und somit insbesondere die Gefahr einer Verschmutzung besteht. Auch kann es bei kontaktierenden Messsystemen durch das sich aufbiegende Blech zu einer Schädigung der Messvorrichtung kommen.

Weitere kontaktbehaftete Vorrichtungen zur Bestimmung des Biegewinkels sind bspw. aus den folgenden Druckschriften bekennt: DE 40 36 289 A1, WO 96/41690, DE 30 08 701 A1, DE 20 44 199 A1 und EP 0 166 351.

Zur Vermeidung der Nachteile kontaktbehafteter Winkelmessvorrichtungen zeigt der Stand der Technik kontaktlose, zumeist optisch arbeitende Winkelmessvorrichtungen. Dabei wird an einem Endbereich des Biegegesenks eine Beleuchtungsvorrichtung und am gegenüberliegenden Endbereich eine Bilderfassungsvorrichtung angeordnet. Die Beleuchtungsvorrichtung gibt längs der Biegelinie einen Lichtstrahl in Richtung der Bilderfassungsvorrichtung ab, die Bilderfassungsvorrichtung weist eine Optik auf, die das stirnseitige Ende des umzuformenden Blechteils erfasst. Solche Ausführungen sind beispielsweise aus den Schriften JP 2155514 A, JP 2280920 A, EP 1 914 019 A1, EP 2 147 729 A1, JP 3052717 A bekannt. Der Nachteil derartiger Ausführungen liegt darin, dass lediglich die Stirnseite des Bleches erfasst wird. Bei kurzen umzuformenden Blechen wird zumeist eine ausreichende Genauigkeit längs der gesamten Biegelinie erreicht, so dass hier eine stirnseitige Erfassung ausreichend sein wird. Bei längeren Blechen und/oder Blechen mit einer höheren Festigkeit, wird der mittlere Abschnitt der Biegelinie aufgrund der unvermeidbaren und nur teilweise kompensierbaren Durchbiegung des Presstisches bzw. des Pressbalkens, einen von den Randabschnitten abweichenden Biegewinkel aufweisen.

Aus der AT 511 557 A1 ist eine Vorrichtung bekannt, bei der eine Lichtquelle längs des Pressbalkens verschiebbar angeordnet ist und so lediglich einen Abschnitt des Bleches beleuchtet. Dieser beleuchtete Abschnitt wird von einem, gegenüber der Biegelinie um einen kleinen Winkel verschwenkten Bilderfassungssystem erfasst und aus der erfassten Beleuchtungsspur der Biegewinkel ermittelt. Der Nachteil dieses Systems liegt nun darin, dass längs des Biegestempels eine verfahrbare Beleuchtungsvorrichtung bzw. dass mehrere Beleuchtungsvorrichtungen vorhanden sein müssen und dass bei langen, umzuformenden Blechteilen gegebenenfalls eine Winkelanpassung der optischen Achse des Kamerasystems erforderlich ist, um längs der Biegelinie jeden Abschnitt mit einer zuverlässigen Genauigkeit erfassen zu können. Eine weitere Vorrichtung zur Messung des Biegewinkels eines Blechs mit einer Beleuchtungsvorrichtung und einer Bilderfassungsvorrichtung ist aus WO 2013/006109 bekannt. Die Vermessung des Blechs erfolgt dabei mit einer Abstandsmessung auf Basis einer Lichtlaufzeitmessung. Dazu wird ein Lichtimpuls abgegeben und es erfolgt eine Erfassung von ganzen Bildern des Abstands mit einer an die Pulsfrequenz gekoppelten Erfassungsrate. Ein Auswerte- und Analysemodul ermittelt einen Biegewinkel zur Regelung des Biegeprozesses.

Die aus dem Stand der Technik bekannten Winkelmessvorrichtungen, insbesondere kontaktlos arbeitende, haben den Nachteil, dass sie im Wesentlichen nur für kurze Blechteile eine ausreichende Genauigkeit aufweisen, oder dass eine Anordnung einer Komponente der Winkelmessvorrichtung im Bereich des sich bewegenden Biegewerkzeugs erforderlich ist, was die Gefahr einer Beschädigung mit sich bringt. Bei Blechteilen mit einer Länge im Meter-Bereich, kann es aufgrund der beim Biegevorgang vorherrschenden Kräfte zu einer geringfügigen Deformation der Biegewerkzeuge kommen, wobei diese zumeist in der Mitte der Biegewerkzeuge (in Längsrichtung der Werkzeuge gesehen) am größten ist. Die bekannten Winkelmessvorrichtungen bestimmen den Biegewinkel jedoch nur stirnseitig, sodass eine Abweichung in der Mitte eines langen Bleches nicht ermittelt werden kann.

Die Aufgabe der Erfindung liegt darin eine Winkelmessvorrichtung zu schaffen, welche kontaktlos eine genaue Ermittlung des aktuellen Biegewinkels während der Umformung und an multiplen Positionen längs eines umzuformenden Werkstücks ermöglicht. Insbesondere ist es Aufgabe der Erfindung, die Winkelmessung auch bei langen Blechteilen zu ermöglichen.

Die Aufgabe der Erfindung wird gelöst durch eine Biegewinkel-Messvorrichtung, umfassend eine Beleuchtungs- und eine Bilderfassungsvorrichtung,
wobei die Beleuchtungsvorrichtung eine Lichtquelle und die Bilderfassungsvorrichtung einen Bildsensor aufweist. Zwischen der Lichtquelle und dem Bildsensor ist ein Strahlengang ausgebildet, entlang welches Strahlengangs ein von der Lichtquelle abgegebenes Lichtbündel zum Bildsensor gelangt. Ferner ist im Strahlengang zwischen der Beleuchtungsvorrichtung und der Bilderfassungsvorrichtung ein zu biegendes Werkstück angeordnet. Die Beleuchtungsvorrichtung weist einen im Strahlengang angeordneten ersten Strahlformer und die Bilderfassungsvorrichtung weist einen im Strahlengang angeordneten zweiten Strahlformer auf. Der Bildsensor ist mit einem Auswerte- und Analysemodul verbunden. Das zu einem Abgabezeitpunkt t_0 von der Beleuchtungsvorrichtung abgegebene Lichtbündel ist als Lichtimpuls mit einer Hellphase der Dauer T_z gebildet und der Bildsensor erfasst zu einem Erfassungszeitpunkt t_c ein Abbild des Werkstücks, wobei die Einzelbild-Erfassungszeit kleiner gleich dem Doppelten der Dauer T_z ist.

Die genauen Merkmale der erfindungsgemäßen Biegewinkel-Messvorrichtung sind im unabhängigen Anspruch 1 definiert. Weiterbildungen dieser Messvorrichtung finden sich in den abhängigen Ansprüchen 2-15. Eine Weiterbildung besteht darin, dass der Erfassungszeitpunkt t_c als Laufzeit des Lichtimpulses von der Lichtquelle zum Werkstück und vom Werkstück zum Bildsensor festgelegt ist. Insbesondere ergibt sich der Erfassungszeitpunkt nach der Formel: t_c -t_0 = 2*L_Fokus/c. Dabei entspricht c der Lichtgeschwindigkeit und L_Fokus entspricht der Brennweite f. Die Brennweite oder Gegenstandsweite wird bevorzugt derart gewählt, dass sie dem Abstand der Bilderfassungsvorrichtung zur Messposition am Werkstück entspricht.

Nach einer Weiterbildung ist vorgesehen dass die Dauer T_z kleiner als Ins ist was bedeutet, dass das Lichtbündel eine Länge von 30cm hat. Da Werkstücke, wie sie üblicher Weise in Biegemaschinen bearbeitet werden, größere Längen aufweisen, kann durch entsprechende Wahl des Erfassungszeitpunkts t_c, eine gewünschte Stelle am Werkstück beleuchtet und von der Bilderfassungsvorrichtung erfasst werden. Zur Erhöhung der Ortsauflösung ist vorgesehen, dass als Dauer T_z auch kürzere Zeiten Verwendung finden können.

Eine Weiterbildung besteht auch darin, dass der erste und/oder zweite Strahlformer durch eine telezentrische Optik gebildet ist. Mittels einer telezentrischen Optik kann, bei entsprechender Ausgestaltung der jeweiligen optischen Elemente, der Fokuspunkt längs der optischen Achse des Objektivs verschoben werden (bzw. die Brennweite geändert werden), ohne dass es dadurch zu perspektivischen Verzerrungen kommt. Insbesondere weist eine telezentrische Optik zumindest eine Linsengruppe und eine Blende auf. Beispielsweise kann die telezentrische Optik als Kollimator ausgebildet sein, welcher aus dem divergenten Lichtbündel, ein paralleles Lichtbündel formt.

Im Hinblick auf ein ausgesandtes Lichtbündel mit einer diskreten Dauer ist eine Weiterbildung von Vorteil, nach der der erste und/oder zweite Strahlformer als Optik mit einer variablen Brennweite ausgebildet ist. Somit kann der Fokuspunkt genau auf den vom Lichtbündel beleuchteten Abschnitt des Werkstücks gelegt werden. Umgekehrt lässt sich nach der Festlegung des beleuchteten Bereichs und damit des Bereichs, für den der Biegewinkel ermittelt werden soll, die dafür erforderliche Brennweite ermitteln.

Zur Erzeugung eines Lichtbündels mit einem impulsförmigen Helligkeitsverlauf ist nach einer Weiterbildung vorgesehen, dass die Lichtquelle als elektrisch impulsförmig ansteuerbares Leuchtmittel ausgebildet ist. Beispielsweise gibt eine Laser- oder Leuchtdiode meist ziemlich unmittelbar nach Anlegen einer elektrischen Betriebsspannung die volle Lichtmenge ab. Nach Abschalten der Versorgungsspannung kommt es zu keinem Nachleuchten - es wird kein weiteres Licht abgegeben. Somit lässt sich sehr gut ein zeitlich begrenzter Lichtimpuls abgeben.

Nach einer weiteren Ausführung kann ein Lichtimpulse auch dadurch gebildet werden, dass die Lichtquelle durch ein Leuchtmittel gebildet ist und in der Beleuchtungsvorrichtung im Strahlengang ein erster Strahlunterbrecher angeordnet ist. Als Lichtquelle kann somit eine Dauerlichtquelle verwendet werden, beispielsweise eine Glüh- oder Gasentladungslampe, oder eine Laser- oder Leuchtdiode. Der Strahlunterbrecher kann bspw. durch einen Gitter-Verschluss gebildet sein, bei dem zwei hintereinander angeordnete Gitterscheiben gegenläufig rotieren. Durch Wahl der Rotationsgeschwindigkeit lässt sich die Dauer des Lichtimpulses gut festlegen.

Da der Bildsensor ein Abbild des Werkstücks in einer Dauer kleiner gleich der doppelten Impulsdauer T_z erfasst, besteht eine Weiterbildung darin, dass in der Bilderfassungsvorrichtung im Strahlengang vor dem Bildsensor, ein zweiter Strahlunterbrecher angeordnet ist. In einer möglichen Ausführung kann der zweite Strahlunterbrecher analog einer zuvor beschriebenen Ausführung, auch durch gegenläufig rotierende Gitterscheiben gebildet sein.

Nach einer Weiterbildung kann der erste und/oder der zweite Strahlunterbrecher auch durch einen elektro-optischen Schalter gebildet sein. Solche Schalter sind dadurch charakterisiert, dass sie beim Anlegen bzw. Abschalten einer elektrischen Spannung, ihre optischen Eigenschaften ändern. Beispielsweise kann sich der Brechungsindex, die Transparenz oder die Polarisationsrichtung ändern. Derartige Schalter basieren beispielsweise auf dem Kerr- oder Pockelts-Effekt.

Da nach der gegenständlichen Ausführung die Erfassungszeit des Bildsensors an die Dauer des Lichtimpulses gekoppelt ist, ist nach einer Weiterbildung vorgesehen, dass der Bildsensor zur selektiven Erfassung eines einzelnen Abbilds oder Bildsegments ausgebildet ist. Somit kann der Bildsensor alleine, ohne zusätzliche Vorrichtung im Strahlengang, mittels eines Startimpulses bzw. Startsignals die Erfassung des Abbilds des Werkstücks durchführen. Beispielsweise kann dies durch einen elektronischen Verschluss realisiert werden, wobei der Bildsensor einen Eingang für ein Freigabesignal aufweist, und nach Anliegen eines solchen Signals, in der beanspruchten Zeitdauer, ein einzelnes Abbild erfasst. In dieser Ausführung fällt permanent rückgestreutes Licht vom Werkstück auf den Bildsensor.

Nach einer Weiterbildung ist auch vorgesehen, dass die Beleuchtungs- und die Bilderfassungsvorrichtung in einem gemeinsamen Gehäuse angeordnet sind. Mit dieser Ausbildung wird erreicht, dass die Beleuchtung und die Bilderfassung von einem Gehäuse aus möglich ist. Dies bedeutet insbesondere auch, dass die Biegewinkel-Messvorrichtung nur an einer Seite einer Biegemaschine angeordnet sein muss, was den Montage- und vor allem den Justageaufwand reduziert. Auch wird durch die gemeinsame Anordnung die Gefahr einer Beschädigung der einzelnen Komponenten der Biegewinkel-Messvorrichtung reduziert.

Nach einer Weiterbildung ist vorgesehen, dass im Gehäuse im Strahlengang ein Strahlteiler angeordnet ist. Der Strahlengang bildet sich von der Beleuchtungsvorrichtung über das Werkstück zur Bilderfassungsvorrichtung. Bei einer Anordnung der Beleuchtungs- und der Bilderfassungsvorrichtung in einem gemeinsamen Gehäuse lässt sich mit einem Strahlteiler erreichen, dass der das Gehäuse von der Beleuchtungsvorrichtung verlassende und der das Gehäuse zur Bilderfassungsvorrichtung erreichende Strahlengang übereinander liegen können. Vom Strahlteiler werden die beiden Anteile getrennt gehalten, so dass die Bilderfassungsvorrichtung keine, oder nur vernachlässigbar geringe, Anteile des ausgesandten Lichtstrahls erreichen. Nicht abschließend kann der Strahlteiler bspw. als semitransparenter Spiegel oder als Prisma ausgebildet sein.

Da nach der gegenständlichen Ausführung eine Lichtimpuls einer diskreten Dauer und ein Abbild ebenfalls mit einer diskreten Dauer erfasst werden soll, ist nach einer Weiterbildung vorgesehen, dass der Strahlteiler eine steuerbare optische Richtungscharakteristik aufweist. Somit kann durch selektive Ansteuerung ein Lichtbündel auf den Strahlengang abgegeben werden, anschließend wird diese Durchlassrichtung wieder gesperrt. Nach Ablauf der Zeit die das Lichtbündel von der Beleuchtungsvorrichtung zum Werkstück und zurück zur Bilderfassungsvorrichtung benötigt, wird der Strahlteiler erneut selektiv angesteuert und lenkt das eintreffende Lichtbündel zur Bilderfassungsvorrichtung. Dazu kann der Strahlteiler bevorzugt derart ausgebildet sein, dass sich durch Anlegen und/oder Variation einer anliegenden elektrischen Spannung, die optischen Eigenschaften ändern, wie es bereits beschrieben wurde. Um die zeitlichen Abläufe zentral steuern zu können, ist es von Vorteil, wenn der erste Strahlunterbrecher oder die Lichtquelle, und der zweite Strahlunterbrecher oder der Bildsensor, mit einem Zeitgeber verbunden sind. Somit lässt sich sowohl die Dauer des ausgesandten Lichtimpulses, als auch die Verzögerung, bis der Bildsensor ein Abbild des Werkstücks erfasst, von einem zentralen Zeitgeber steuern. Aufgrund der kurzen Zeiten ist dies von Vorteil, da somit Synchronisations-Toleranzen und Laufzeiten zwischen diskreten Einheiten vermieden werden können.

Diesbezüglich besteht eine Weiterbildung darin, dass der Zeitgeber ein Laufzeit-Element aufweist, über welches der zweite Strahlunterbrecher oder der Bildsensor mit dem Zeitgeber verbunden ist. Basierend auf dem Abgabezeitpunkt des Lichtimpulses, lässt sich der Zeitpunkt der Bilderfassung durch den Bildsensor als Zeitdifferenz vom Abgabezeitpunkt des Lichtimpulses ableiten.

Die Aufgabe der Erfindung wird auch durch ein Verfahren zur Bestimmung eines Biegewinkels mit einer gegenständlichen Biegewinkel-Messvorrichtung nach einem der Ansprüche 1-15 gelöst. Dabei wird von der Lichtquelle der Beleuchtungsvorrichtung ein Lichtbündel entlang des Strahlengangs zum Bildsensor der Bilderfassungsvorrichtung abgegeben, wobei sich im Strahlengang ein Blech als Werkstück befindet, für welches der Biegewinkel zu bestimmen ist. Vom Auswerte- und Analysemodul wird ein vom Bildsensor erfasstes Bild aufbereitet, im aufbereiteten Bild die Lage der Blechschenkel ermittelt und daraus der Winkel zwischen den Blechschenkeln als Biegewinkel ermittelt. Dazu wird von der Lichtquelle zum Abgabezeitpunkt t_0 ein Lichtimpuls der Dauer T_z abgegeben, zeitverzögert wird vom Bildsensor zum Erfassungszeitpunkt t_c ein Bild erfasst. Die genauen Merkmale dieses Verfahrens sind im Anspruch 16 definiert. Eine Weiterbildung besteht darin, dass vom ersten Strahlunterbrecher zum Abgabezeitpunkt t_0 Licht der Strahlengang für die Dauer T_z freigegeben wird, oder das die Lichtquelle zum Abgabezeitpunkt t_0 aktiviert wird und nach der Dauer T_z deaktiviert wird. Mit dieser Weiterbildung wird gewährleistet, dass der Strahlengang für Licht einer Dauerlichtquelle für die vorgegebene Dauer T_z freigegeben wird, oder dass eine Impulslichtquelle für die Dauer T_z angesteuert wird. Entlang des Strahlengangs bewegt sich somit jedenfalls ein Lichtbündel der geforderten Dauer und korrespondierenden Länge.

Um die charakteristischen Parameter zur Bestimmung des Biegewinkels definieren und steuern zu können, ist gemäß einer Weiterbildung vorgesehen, dass die Ablaufzeiten t_0, T_z und t_c vom Zeitgeber vorgegeben werden, insbesondere dass von diesem die Lichtquelle bzw. erste Strahlunterbrecher und der Bildsensor bzw. zweite Strahlunterbrecher angesteuert werden.

Da das gegenständliche Verfahren meist auf einer Biegemaschine mit einer entsprechenden Steuerung ablaufen wird, ist gemäß einer Weiterbildung vorgesehen, dass von einer Maschinensteuerung charakteristische Prozessdaten an den Zeitgeber übermittelt werden, woraus von diesem die Impulsdauer T_z und der Erfassungszeitpunkt t_c ermittelt werden. Der Maschinensteuerung sind zumeist die Werkstückparameter des zu biegenden Werkstücks bekannt - bspw. aus einem Produktionsplanungssystem. Somit kann die Maschinensteuerung vorgeben, an welcher Stelle des Werkstücks der Biegewinkel ermittelt werden soll. Unter Kenntnis der optische Kenngrößen der Bilderfassungsvorrichtung, insbesondere der Brennweite f und des Schärfebereichs, kann der Zeitgeber insbesondere die Impulsdauer und den Erfassungszeitpunkt ermitteln, um an der geforderten Position des Werkstücks, die Ermittlung des Biegewinkels durchführen zu können.

Die Erfindung wird auch durch eine Biegemaschine, insbesondere Gesenk- oder Schwenkbiegemaschine, mit einer gegenständlichen Biegewinkel-Messvorrichtung nach einem der Ansprüche 1-15 Die Biegemaschine weist eine Biegewerkzeuganordnung aus einem maschinenfestem Unterwerkzeug und einem relativ dazu beweglichen Oberwerkzeug auf, wobei in der Biegewerkzeuganordnung ein umzuformendes Blechteil angeordnet ist, welches während der Durchführung der Biegeumformung entlang einer Biegelinie gebogen wird. Die Biegewinkel-Messvorrichtung ist seitlich der Biegewerkzeuganordnung angeordnet, sodass der Strahlengang parallel zur Biegelinie ausgerichtet ist.

Eine Weiterbildung besteht darin, dass die Biegewerkzeuganordnung ein Unter- und ein Oberwerkzeug, oder ein Niederhaltwerkzeug und eine Schwenkwange aufweist. Diese beiden Ausführungsvarianten kennzeichnen eine Gesenkbiege- und eine Schwenkbiegemaschine.

Nach einer Weiterbildung ist die Beleuchtungs- und Bilderfassungsvorrichtung der Biegewinkel-Messvorrichtung in einem gemeinsamen Gehäuse angeordnet, welches Gehäuse in einem seitlichen Nahbereich der Biegewerkzeuganordnung angeordnet. Somit wird einerseits ein kompakter Aufbau erreicht und andererseits der Montage- und Justageaufwand reduziert. Auch kann durch einseitige Anordnung das Gehäuse gut vor den bestimmungsgemäß auftretenden Gefahren an einer Biegemaschine geschützt werden.

Nach einer Weiterbildung kann auch vorgesehen sein, dass die Beleuchtungs- und Bilderfassungsvorrichtung der Biegewinkel-Messvorrichtung in gegenüber liegenden seitlichen Nahbereichen der Biegewerkzeuganordnung angeordnet sind. Dies ist dann von Vorteil, wenn bspw. die Platzverhältnisse eine einseitige Anordnung nicht erlauben.

Zum besseren Verständnis der Erfindung wird diese anhand der nachfolgenden Figuren näher erläutert.

Es zeigen jeweils in stark vereinfachter, schematischer Darstellung:
- Fig. 1: die gegenständlichen Biegewinkel-Messvorrichtung;
- Fig. 2: a) bis c) das Messprinzip nach einem Verfahren an der gegenständlichen Biegewinkel-Messvorrichtung.

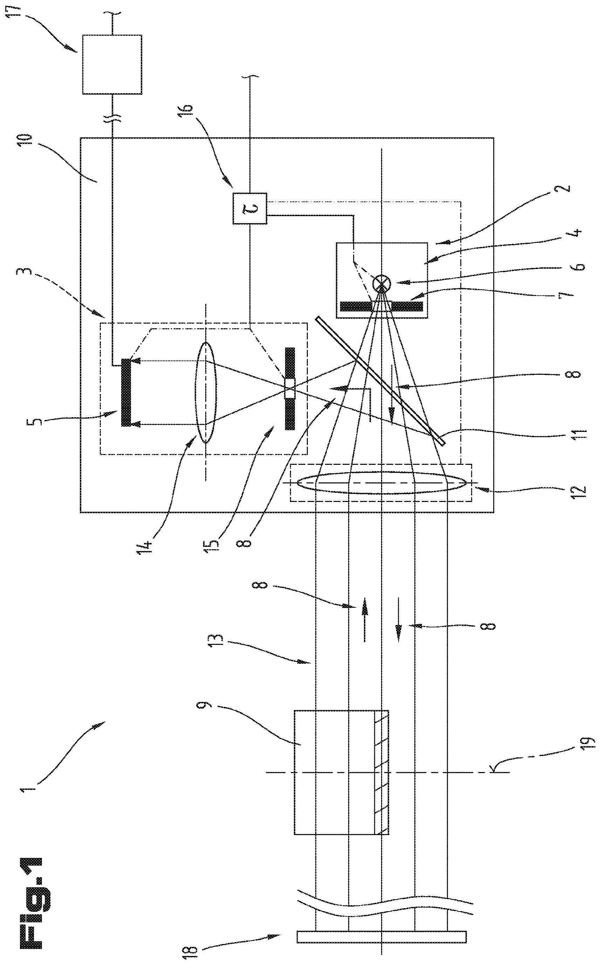

Fig. 1 zeigt eine gegenständliche Biegewinkel-Messvorrichtung 1 umfassend eine Beleuchtungsvorrichtung 2 und eine Bilderfassungsvorrichtung 3. Die Beleuchtungsvorrichtung 2 weist eine Lichtquelle 4 und die Bilderfassungsvorrichtung 3 einen Bildsensor 5 auf. In der dargestellten Ausführungsform ist die Lichtquelle 4 durch ein Leuchtmittel 6 und einen ersten Strahlunterbrecher 7 gebildet.

Von der Beleuchtungsvorrichtung 2 wird ein Lichtbündel entlang eines Strahlengangs 8 zur Bilderfassungsvorrichtung 3, insbesondere dem Bildsensor 5, gelangen, wobei im Strahlengang 8 ein zu biegendes Werkstück 9 angeordnet ist, für welches Werkstück 9 während der Durchführung einer Biegeumformung der sich aktuell einstellende Biegewinkel bestimmt werden soll. In der dargestellten Ausführung sind die Beleuchtungsvorrichtung 2 und die Bilderfassungsvorrichtung 3 in einem gemeinsamen Gehäuse 10 angeordnet, was den Vorteil hat, dass die gesamte Beleuchtungs- und Bilderfassungsvorrichtung nur an einer Seite einer Biegemaschine angeordnet werden muss und sich somit der Montage- und insbesondere der Justageaufwand deutlich reduzieren.

Bei der Anordnung in einem gemeinsamen Gehäuse 10 ist im Strahlengang 8 ein Strahlteiler 11 angeordnet, der ein von der Beleuchtungsvorrichtung 2 ausgesandtes Lichtbündel in Richtung des Werkstücks 9 passieren lässt und das vom Werkstück 9 zurückgestreute bzw. reflektierte Lichtbündel in Richtung der Bilderfassungsvorrichtung 3 ablenkt. Ein solcher Strahlteiler 11 kann beispielsweise durch ein Prisma oder einen semitransparenten Spiegel gebildet sein.

Im Strahlengang 8 der Beleuchtungsvorrichtung 2 ist ein erster Strahlformer 12 angeordnet, welcher die Intensitätsverteilung des von der Beleuchtungsvorrichtung 2 abgegebenen Lichtbündels bzw. die Strahlausrichtung hinsichtlich der Direktivität beeinflussen kann. Im dargestellten Fall wird vom ersten Strahlformer 12 ein vom Leuchtmittel 6 ausgehendes divergentes Strahlenbündel in ein paralleles, kollimiertes Strahlenbündel 13 geformt. Ebenso ist im Strahlengang 8 vor dem Bildsensor 5 ein zweiter Strahlformer 14 angeordnet, welcher das vom Werkstück 9 entlang des Strahlengangs eintreffende Lichtbündel formt und auf den Bildsensor 5 weiterleitet.

Nach der gegenständlichen Ausführung ist vorgesehen, dass von der Beleuchtungsvorrichtung 2 ein Lichtimpuls in Richtung des Werkstücks 9 abgegeben wird. In der dargestellten Ausführung wird der Lichtimpuls dadurch erzeugt, dass ein Leuchtmittel 6 kontinuierlich Licht abgibt, die Lichtabgabe in Richtung des Strahlengangs 8 jedoch durch einen ersten Strahlunterbrecher 7 selektiv freigegeben wird. Insbesondere erfolgt die Freigabe für die gewünschte Zeitdauer T_z. Ebenso ist gemäß der gegenständlichen Ausführung vorgesehen, dass vom Bildsensor 5 zu einem Erfassungszeitpunkt t_c ein Abbild des Werkstücks 9 erfasst wird, wobei die Einzelbilderfassungszeit kleiner gleich der Dauer T_z ist. Daher ist im Strahlengang 8 vor dem Bildsensor 5 ein zweiter Strahlunterbrecher 15 angeordnet. Ähnlich dem ersten Strahlunterbrecher 7, gibt auch dieser zweite Strahlunterbrecher 15 den Strahlengang 8 zum Bildsensor 5 selektiv nur für eine bestimmte Zeitdauer T_z frei, wobei der Startzeitpunkt für die Freigabe, als Erfassungszeitpunkt t_c bezeichnet, von der Laufzeit des Lichtbündels von der Beleuchtungsvorrichtung 2 entlang des Strahlengangs 8 zum Werkstück 9 und zurück zum Bildsensor 5 abhängt bzw. festgelegt wird. Um die zeitlichen Abläufe zu koordinieren, insbesondere um die Zeitverzögerung zwischen dem Abgabezeitpunkt t_0 des Lichtbündels von der Beleuchtungsvorrichtung 2 bis zum Erfassungszeitpunkt t_c, des Eintreffens des abgegebenen Lichtbündels bei der Bilderfassungsvorrichtung 3 zu ermitteln, sind der erste Strahlunterbrecher 7 oder die Lichtquelle 4 sowie der zweite Strahlunterbrecher 15 oder der Bildsensor 5, mit einem Zeitgeber 16 verbunden.

Das vom Bildsensor 5 erfasste Abbild des Werkstücks wird von einem Auswerte- und Analysemodul 17 aufbereitet, analysiert, insbesondere werden im aufbereiteten Bild die Lage der Blechschenkel ermittelt und daraus der Winkel zwischen den Blechschenkeln als Biegewinkel ermittelt. Das Auswerte- und Analysemodul 17 ist mit einer nicht dargestellten Maschinensteuerung verbunden, welche basierend auf dem ermittelten Biegewinkel den Biegevorgang steuert, insbesondere bei erreichen des geforderten Biegewinkels den Biegevorgang beendet. In einer Ausführung ist es ebenfalls möglich, dass der Zeitgeber 16 mit der Maschinensteuerung verbunden ist und von dieser charakteristische Daten über den aktuell durchzuführenden Biegevorgang übermittelt bekommt. Da der Maschinensteuerung insbesondere die Länge des zu biegenden Werkstückes 9 bekannt ist, kann der Zeitgeber 16 aus der Kenntnis dieser Länge und der Kenntnis der Brennweite des ersten Strahlformers 12 die erforderlichen Zeiten ermitteln. Da gemäß einer weiteren möglichen Ausführung der erste Strahlformer 12 durch eine Optik mit variabler Brennweite gebildet ist, ist es ferner möglich, dass der Zeitgeber 16 beispielsweise über ein Antriebsmittel die Brennweite des ersten Strahlformers 12 verändert, um so die optischen Gegebenheiten an die durchzuführende Messung anzupassen.

In der Darstellung weisen sowohl die Beleuchtungsvorrichtung 2, als auch die Bilderfassungsvorrichtung 3 jeweils einen Strahlunterbrecher 7, 15 auf. Gemäß einer weiteren Ausbildung ist es jedoch auch möglich, dass beispielsweise die Beleuchtungsvorrichtung 2 ein elektrisch impulsförmig ansteuerbares Leuchtmittel 6 aufweist, welche ohne einen ersten Strahlunterbrecher 7 direkt nach einer entsprechenden elektrischen Ansteuerung einen Lichtimpuls der geforderten Dauert T_Z in Richtung des Strahlengangs 8 abgibt. Ebenso ist es möglich, dass der Bildsensor 5 zur selektiven Erfassung eines einzelnen Abbilds oder nur Bildsegments ausgebildet ist und somit auch kein zweiter Strahlunterbrecher 15 erforderlich ist. Ebenso sind auch Kombinationen der beiden Ausführungsvarianten möglich.

Bei einer einseitigen Anordnung in einem gemeinsamen Gehäuse 10 wird das von der Beleuchtungsvorrichtung 2 längs des Strahlengangs 8 ausgesandte Lichtbündel nach Passieren des Werkstücks 9 sich weiter bewegen und letztendlich dem Gehäuse 10 gegenüberliegende Teile der Biegemaschine erreichen. Hier kann es nun zu Reflexionen kommen, was unter Umständen für den Bediener der Biegemaschine eine gewisse Gefahr bedeuten könnte, da das Lichtbündel zumeist eine sehr hohe Lichtintensität aufweisen wird und es daher durch reflektierte bzw. gestreute Anteile des Lichtbündels unter Umständen zu einem Blendeffekt des Bedieners kommen kann. Daher kann beispielsweise dem Gehäuse 10 gegenüberliegend ein Absorber 18 angeordnet sein, welcher das Lichtbündel nach Passieren des Werkstücks 9 absorbiert und somit eine Blendung des Bedieners verhindert.

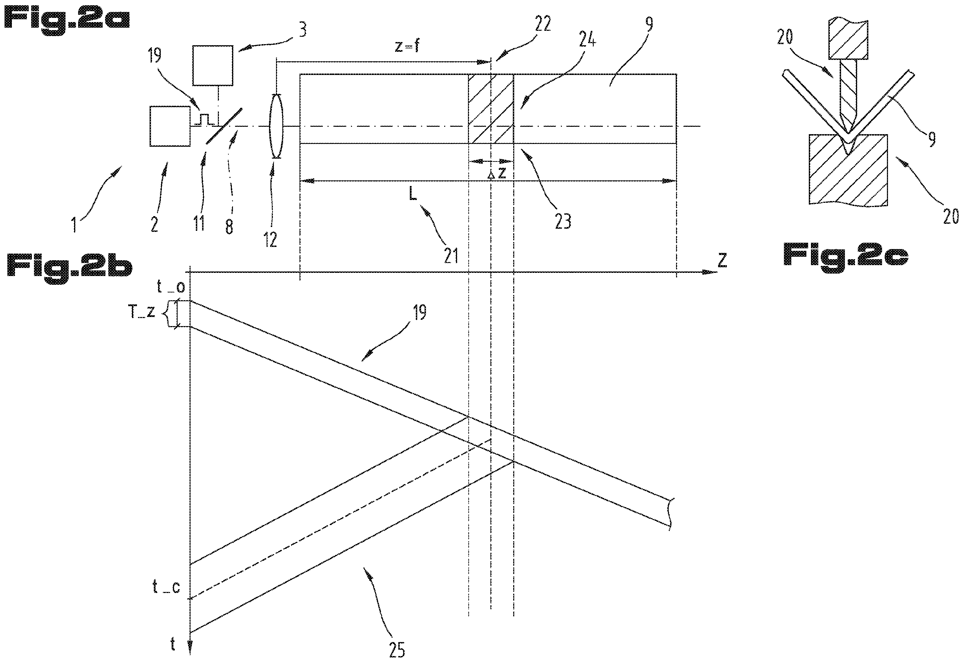

Fig. 2 zeigt eine zeitliche und räumliche Darstellung der gegenständlichen Vorrichtung bzw. des Verfahrens. Fig. 2a und 2c zeigen die prinzipiellen Verhältnisse bei der Bestimmung eines Biegewinkels eines zu biegenden Werkstückes 9 mit einer gegenständlichen Biegewinkel-Messvorrichtung 1. Die Komponenten der Biegewinkel-Messvorrichtung 1 sind dabei schematisiert dargestellt. Von der Beleuchtungsvorrichtung 2 wird ein Lichtimpuls 19 längs des Strahlengangs 8 in Richtung des Werkstückes 9 ausgesandt. Bei der Bewegung des Lichtimpulses 19 längs des Strahlenganges 8 kommt es in jedem Abschnitt des Werkstücks zu einer Reflexion bzw. Streuung des Lichtimpulses 19 an der metallischen Oberfläche des Werkstückes 9 bzw. an der Biegewerkzeuganordnung 20. Teile dieses gestreuten bzw. reflektierten Anteils des ausgesandten Lichtimpulses 19 gelangen über den Strahlengang 8 und den Strahlteiler 11 zurück zur Bilderfassungsvorrichtung 3. Während der Bewegung des Lichtimpulses 19 längs der Länge 21 des Werkstücks 9 gelangen also kontinuierlich Anteile des gestreuten bzw. reflektierten Lichtes zurück zur Bilderfassungsvorrichtung 3. Nun weist der erste Strahlformer 12 zwei optische Kenngrößen auf, welche die Abbildungseigenschaften bzw. das Abbildungsverhalten definieren. Einerseits hat der erste Strahlformer 12 eine Brennweite 22, welche den Punkt des optimalen Fokus definiert, um diesen Fokuspunkt existiert ein Schärfebereich oder auch Schärfentiefe 23, in welchem eine konturscharfe Abbildung möglich ist. Wird nun beispielsweise die Brennweite in die Mitte des zu vermessenden Abschnitts 24 des Werkstückes 9 gelegt, so erstreckt sich dieser Schärfebereich zu beiden Seiten dieses Fokuspunkts, bevorzugt symmetrisch. Nimmt nun die Bilderfassungsvorrichtung 3 alle zurückkommenden Anteile des Lichtimpulses 19 entlang des Strahlengangs 8 längs des Werkstückes 9 auf, gelangen neben Anteilen aus dem Schärfebereich 23 auch viele Anteile außerhalb dieses Schärfebereichs zurück zur Bilderfassungsvorrichtung 3, wodurch im erfassten Abbild die Konturen verloren gehen und man eine sehr verwaschene, unscharfe Darstellung erhält und somit der Informationsgehalt des Rohdatenbildes verschlechtert wird.

Eine vergleichbare Situation erhält man, wenn die Beleuchtungsvorrichtung 2 Dauerlicht abgibt, sodass die Bilderfassungsvorrichtung 3 gleichzeitig Anteile aller Abschnitte längs des Strahlengangs 8 entlang des Werkstücks 9 enthält.

Soll nun ein spezifischer Abschnitt 24 innerhalb der Länge 21 des Werkstücks 9 erfasst werden und für diesen Abschnitt 24 der Biegewinkel bestimmt werden, ist nach der gegenständlichen Ausführung vorgesehen, dass nur jene Anteile des reflektierten bzw. gestreuten Lichts die Bilderfassungsvorrichtung 3 erreichen, welche aus dem zu erfassenden Abschnitt 24 stammen. Daher ist der Bildsensor der Bilderfassungsvorrichtung 3 zur selektiven Erfassung eines einzelnen Abbildes oder eines Bildsegmentes ausgebildet bzw. ist in der Bilderfassungsvorrichtung 3 im Strahlengang vor dem Bildsensor ein zweiter Strahlunterbrecher angeordnet. Diese Ausbildung stellt sicher, dass der Bildsensor nur dann ein Abbild erfasst bzw. erfassen kann, wenn Licht den Bildsensor erreicht, das aufgrund der Laufzeit aus dem relevanten Abschnitt stammt.

Fig. 2b zeigt ein Weg-Zeit-Diagramm gemäß der gegenständlichen Ausführung. Auf der Abszisse ist die Wegerstreckung von der Beleuchtungsvorrichtung 2 längs des Werkstücks 9 dargestellt. Die Ordinate zeigt den Zeitablauf.

Für die Darstellung wird angenommen, dass der erste Strahlformer 12 eine Brennweite 22 aufweist, welche ca. in der Mitte der Länge 21 des Werkstücks 9 liegt. Die Dauer T_z des Lichtimpulses 19 wird so gewählt, dass sie im Wesentlichen dem Schärfebereich 23 des ersten Strahlformers 12 entspricht.

Zum Zeitpunkt t_0 wird ein Lichtimpuls 19 mit der Dauer T_z abgegeben und bewegt sich längs des Strahlengangs 8 in Richtung auf den zu erfassenden Abschnitt 24 und darüber hinaus. Im Bereich des zu erfassenden Abschnittes 24 kommt es vor allem zu einer Rückstreuung von Licht, welches sich als Streulicht 25 entlang des Strahlengangs 8 zurück in Richtung der Bilderfassungsvorrichtung 3 bewegt. Zu einem Erfassungszeitpunkt t_c wird der Bildsensor der Bilderfassungsvorrichtung 3 aktiviert bzw. wird der zweite Strahlunterbrecher deaktiviert, und vom Bildsensor wird ein Abbild des gewünschten Abschnitts 24 des Werkstücks 9 erfasst. Da die gegenständliche Biegewinkel-Messvorrichtung 1 bevorzugt für Biegemaschinen verwendet wird, wird im erfassten Abbild neben dem Werkstück 9 auch die Biegewerkzeuganordnung 20 abgebildet sein. Diese Situation ist in Fig. 2c dargestellt.

Bevorzugt wird der Erfassungszeitpunkt t_c so gewählt werden, dass er der Laufzeit des Lichtimpulses 19 von der Beleuchtungsvorrichtung 2 zur Brennweite und zurück zur Bilderfassungsvorrichtung 3 entspricht. Da, wie in der Fig. 2b dargestellt, die Streulicht-Anteile der Abschnitte längs des Strahlengangs 8 vor und nach dem relevanten Abschnitt 24 von der Bilderfassungsvorrichtung nicht erfasst werden, gelangen keine Lichtanteile aus dem Unschärfebereich des ersten Strahlformers 12 in die Bilderfassungsvorrichtung 3, wodurch eine scharfe Abbildung des erfassten Abschnitts 24 erfasst wird (wie in Fig. 2c).

Die Laufzeit für den Lichtimpuls von der Beleuchtungsvorrichtung 2 zum Werkstück 9 und zurück zur Bilderfassungsvorrichtung 3 berechnet sich mit: t_z = 2*z/c. Wobei wie bereits beschreiben, die Brennweite f 22 gleich der Mitte des Abschnitts 24 gewählt wurde. Die erforderliche Impulsdauer T_z ergibt sich aus dem Produkt der z-Länge (der Brennweite) dem Kehrwert der Lichtgeschwindigkeit c. T_z = z/c.

Der besondere Vorteil der gegenständlichen Vorrichtung liegt nun darin, dass an einer Mehrzahl von Punkten längs der Längserstreckung eines umzuformenden Bleches und insbesondere während der Durchführung der Biegeumformung, der sich einstellende Biegewinkel gemessen werden kann, ohne dafür eine Repositionierung bzw. Verschiebung von Erfassungskomponenten längs des Werkstücks durchführen zu müssen. Auch sind bei Erhöhung bzw. Variation der Messpositionen keine zusätzlichen Messvorrichtungen erforderlich. Die Anpassung der einzelnen Messpositionen ist lediglich durch Änderung einer Brennweite und durch Anpassung der Impulsdauer bzw. Erfassungszeit möglich.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten der Biegewinkel-Messvorrichtung, wobei an dieser Stelle bemerkt sei, dass die Erfindung nicht auf die speziell dargestellten Ausführungsvarianten derselben eingeschränkt ist. Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Biegewinkel-Messvorrichtung diese bzw. deren Bestandteile teilweise unmaßstäblich und/oder vergrößert und/oder verkleinert dargestellt wurden.

### Bezugszeichenaufstellung

- 1: Biegewinkel-Messvorrichtung
- 2: Beleuchtungsvorrichtung
- 3: Bilderfassungsvorrichtung
- 4: Lichtquelle
- 5: Bildsensor
- 6: Leuchtmittel
- 7: erster Strahlunterbrecher
- 8: Strahlengang
- 9: Werkstück
- 10: Gehäuse
- 11: Strahlteiler
- 12: erster Strahlformer
- 13: kollimiertes Strahlenbündel
- 14: zweiter Strahlformer
- 15: zweiter Strahlunterbrecher
- 16: Zeitgeber
- 17: Auswerte- und Analysemodul
- 18: Absorber
- 19: Lichtimpuls
- 20: Biegewerkzeuganordnung
- 21: Länge
- 22: Brennweite
- 23: Schärfebereich
- 24: Abschnitt
- 25: Streulicht

## Patentansprüche

1. Biegewinkel-Messvorrichtung (1) umfassend
eine Beleuchtungsvorrichtung (2) und eine Bilderfassungsvorrichtung (3),
wobei die Beleuchtungsvorrichtung (2) eine Lichtquelle (4) und
die Bilderfassungsvorrichtung (3) einen Bildsensor (5) aufweist
wobei zwischen der Lichtquelle (4) und dem Bildsensor (5) ein Strahlengang (8) ausgebildet ist, entlang welches Strahlengangs (8) ein von der Lichtquelle (4) abgegebenes Lichtbündel zum Bildsensor (5) gelangt,
wobei im Strahlengang (8) zwischen der Beleuchtungsvorrichtung (2) und der Bilderfassungsvorrichtung (3) ein entlang einer Biegelinie zu biegendes Blech als Werkstück (9) angeordnet ist, wobei der Strahlengang (8) parallel zur Biegelinie ausgerichtet ist, und
wobei die Beleuchtungsvorrichtung (2) einen im Strahlengang (8) angeordneten ersten Strahlformer (12) aufweist, und
wobei die Bilderfassungsvorrichtung (3) einen im Strahlengang (8) angeordneten zweiten Strahlformer (14) aufweist, und
wobei der Bildsensor (5) mit einem zur Biegewinkel-Messvorrichtung gehörenden Auswerte-und Analysemodul (17) verbunden ist,
**dadurch gekennzeichnet, dass**
das zu einem Abgabezeitpunkt t_0 von der Beleuchtungsvorrichtung (2) abgegebene Lichtbündel als Lichtimpuls (19) mit einer Hellphase der Dauer T_z gebildet ist,
und dass der Bildsensor (5) zu einem Erfassungszeitpunkt t_c ein Abbild eines Abschnitts (24) des Werkstücks (9) erfasst, wobei die Einzelbild-Erfassungszeit kleiner gleich dem Doppelten der Dauer T_z ist, und
wobei das Auswerte- und Analysemodul (17) dazu ausgebildet ist, ein vom Bildsensor (5) erfasstes Bild aufzubereiten, im aufbereiteten Bild die Lage der Blechschenkel zu ermitteln und daraus den Winkel zwischen den Blechschenkeln als Biegewinkel zu ermitteln.

2. Biegewinkel-Messvorrichtung nach Anspruch 1, **dadurch gekennzeichnet, dass** der Erfassungszeitpunkt t_c als Laufzeit des Lichtimpulses (19) von der Lichtquelle (4) zum Werkstück (9) und vom Werkstück (9) zum Bildsensor (5) festgelegt ist.

3. Biegewinkel-Messvorrichtung nach einem der Ansprüche 1 oder 2, **dadurch gekennzeichnet, dass** die Dauer T_z kleiner als Ins ist.

4. Biegewinkel-Messvorrichtung nach einem der Ansprüche 1 bis 3, **dadurch gekennzeichnet, dass** der erste (12) und/oder zweite (14) Strahlformer durch eine telezentrische Optik gebildet ist.

5. Biegewinkel-Messvorrichtung nach einem der Ansprüche 1 bis 4, **dadurch gekennzeichnet, dass** der erste (12) und/oder zweite (14) Strahlformer als Optik mit einer variablen Brennweite (22) ausgebildet ist.

6. Biegewinkel-Messvorrichtung nach einem der Ansprüche 1 bis 5, **dadurch gekennzeichnet, dass** die Lichtquelle (4) als elektrisch impulsförmig ansteuerbares Leuchtmittel (6) ausgebildet ist.

7. Biegewinkel-Messvorrichtung nach einem der Ansprüche 1 bis 5, **dadurch gekennzeichnet, dass** die Lichtquelle (4) durch ein Leuchtmittel (6) gebildet ist und in der Beleuchtungsvorrichtung (2) im Strahlengang (8) ein erster Strahlunterbrecher (7) angeordnet ist.

8. Biegewinkel-Messvorrichtung nach einem der Ansprüche 1 bis 7, **dadurch gekennzeichnet, dass** in der Bilderfassungsvorrichtung (3) im Strahlengang (8) vor dem Bildsensor (5), ein zweiter Strahlunterbrecher (15) angeordnet ist.

9. Biegewinkel-Messvorrichtung nach Anspruch 7 oder 8, **dadurch gekennzeichnet, dass** der erste (7) und/oder der zweite Strahlunterbrecher (15) durch einen elektro-optischen Schalter gebildet ist.

10. Biegewinkel-Messvorrichtung nach einem der Ansprüche 1 bis 8, **dadurch gekennzeichnet, dass** der Bildsensor (5) zur selektiven Erfassung eines einzelnen Abbilds oder Bildsegments ausgebildet ist.

11. Biegewinkel-Messvorrichtung nach einem der Ansprüche 1 bis 10, **dadurch gekennzeichnet, dass** die Beleuchtungs- und die Bilderfassungsvorrichtung (3) in einem gemeinsamen Gehäuse (10) angeordnet sind.

12. Biegewinkel-Messvorrichtung nach Anspruch 11, **dadurch gekennzeichnet, dass** im Gehäuse (10) im Strahlengang (8) ein Strahlteiler (11) angeordnet ist.

13. Biegewinkel-Messvorrichtung nach Anspruch 12, **dadurch gekennzeichnet, dass** der Strahlteiler (11) eine steuerbare optische Richtungscharakteristik aufweist.

14. Biegewinkel-Messvorrichtung nach einem der Ansprüche 1 bis 13, **dadurch gekennzeichnet, dass** der erste Strahlunterbrecher (7) oder die Lichtquelle (4), und der zweite Strahlunterbrecher (15) oder der Bildsensor (5), mit einem Zeitgeber (16) verbunden sind.

15. Biegewinkel-Messvorrichtung nach Anspruch 14, **dadurch gekennzeichnet, dass** der Zeitgeber (16) ein Laufzeit-Element aufweist, über welches der zweite Strahlunterbrecher (15) oder der Bildsensor (5) mit dem Zeitgeber (16) verbunden ist.

16. Verfahren zur Bestimmung eines Biegewinkels mit einer Biegewinkel-Messvorrichtung (1) nach einem der Ansprüche 1 bis 15, wobei von der Lichtquelle (4) der Beleuchtungsvorrichtung (2) ein Lichtbündel entlang des Strahlengangs (8) zum Bildsensor (5) der Bilderfassungsvorrichtung (3) abgegeben wird, wobei sich im Strahlengang (8) ein Blech als Werkstück (9) befindet, für welches der Biegewinkel zu bestimmen ist,
wobei vom Auswerte- und Analysemodul (17) ein vom Bildsensor (5) erfasstes Bild aufbereitet wird und im aufbereiteten Bild die Lage der Blechschenkel ermittelt wird und daraus der Winkel zwischen den Blechschenkeln als Biegewinkel ermittelt wird,
**dadurch gekennzeichnet, dass**
von der Lichtquelle (4) zum Abgabezeitpunkt t_0 ein Lichtimpuls (19) der Dauer T_z abgegeben wird.

17. Verfahren nach Anspruch 16, **dadurch gekennzeichnet, dass** vom ersten Strahlunterbrecher zum Abgabezeitpunkt t_0 Licht der Strahlengang (8) für die Dauer T_z freigegeben wird, oder das die Lichtquelle (4) zum Abgabezeitpunkt t_0 aktiviert wird und nach der Dauer T_z deaktiviert wird.

18. Verfahren nach einem der Ansprüche 16 oder 17, **dadurch gekennzeichnet, dass** die Ablaufzeiten t_0, T_z und t_c vom Zeitgeber (16) vorgegeben werden, insbesondere dass von diesem die Lichtquelle (4) und der Bildsensor (5) angesteuert werden.

19. Verfahren nach einem der Ansprüche 16 bis 18, **dadurch gekennzeichnet, dass** von einer Maschinensteuerung charakteristische Prozessdaten an den Zeitgeber (16) übermittelt werden, woraus von diesem die Impulsdauer T_z und der Erfassungszeitpunkt t_c ermittelt werden.

20. Biegemaschine, insbesondere Gesenk- oder Schwenkbiegemaschine, mit einer Biegewinkel-Messvorrichtung (1),
wobei die Biegemaschine eine Biegewerkzeuganordnung aus einem maschinenfestem Unterwerkzeug und einem relativ dazu beweglichen Oberwerkzeug aufweist,
und wobei in der Biegewerkzeuganordnung ein umzuformendes Blechteil angeordnet ist, welches während der Durchführung der Biegeumformung entlang einer Biegelinie gebogen wird, wobei die Biegewinkel-Messvorrichtung (1) seitlich der Biegewerkzeuganordnung angeordnet ist, sodass der Strahlengang (8) parallel zur Biegelinie ausgerichtet ist,
**dadurch gekennzeichnet, dass**
die Biegewinkel-Messvorrichtung (1) nach einem der Ansprüche 1 bis 15 ausgebildet ist.

21. Biegemaschine nach Anspruch 20, **dadurch gekennzeichnet, dass** die Biegewerkzeuganordnung ein Unter- und ein Oberwerkzeug, oder ein Niederhaltwerkzeug und eine Schwenkwange aufweist.

22. Biegemaschine nach Anspruch 20 oder 21, wobei die Beleuchtungs- und Bilderfassungsvorrichtung (3) der Biegewinkel-Messvorrichtung (1) in einem gemeinsamen Gehäuse (10) angeordnet sind, **dadurch gekennzeichnet, dass** das Gehäuse (10) in einem seitlichen Nahbereich der Biegewerkzeuganordnung angeordnet sind.

23. Biegemaschine nach Anspruch 20 oder 21, **dadurch gekennzeichnet, dass** die Beleuchtungs- und Bilderfassungsvorrichtung (3) der Biegewinkel-Messvorrichtung (1) in gegenüber liegenden seitlichen Nahbereichen der Biegewerkzeuganordnung angeordnet sind.

## Claims

1. A bending angle measuring device (1), comprising
an illumination device (2) and an image capturing device (3),
wherein the illumination device (2) comprises a light source (4) and
the image capturing device (3) comprises an image sensor (5)
wherein a beam path (8) is formed between the light source (4) and the image sensor (5), along which beam path (8) a light bundle emitted by the light source (4) travels to the image sensor (5),
wherein a sheet metal as a workpiece (9) to be bent along a bending line is arranged in the beam path (8) between the illumination device (2) and the image capturing device (3),
wherein the beam path (8) is aligned parallel to the bending line, and
wherein the illumination device (2) comprises a first beam former (12) arranged in the beam path (8), and
wherein the image capturing device (3) comprises a second beam former (14) arranged in the beam path (8), and
wherein the image sensor (5) is connected to an evaluation and analysis module (17) associated with the bending angle measuring device (1),
**characterized in that**
the light bundle emitted by the illumination device (2) at an output point time t_0 is formed as a light pulse (19) with a light phase of the duration T_z,
and that the image sensor (5) detects an image of a portion (24) of workpiece (9) at a detection time t_c, wherein the single image acquisition time is less than or equal to twice the duration T_z, and
wherein the evaluation and analysis module (17) is configured to process an image detected by the image sensor (5), to determine the position of the sheet metal legs in the processed image and to determine therefrom the angle between the sheet metal legs as the bending angle.

2. The bending angle measuring device according to claim 1, **characterized in that** the detection time t_c is defined as the transit time of the light pulse (19) from the light source (4) to the workpiece (9) and from the workpiece (9) to the image sensor (5).

3. The bending angle measuring device according to any one of claims 1 or 2, **characterized in that** the duration T_z is less than 1 ns.

4. The bending angle measuring device according to any one of claims 1 to 3, **characterized in that** the first (12) and/or second (14) beam former is formed by a telecentric optics.

5. The bending angle measuring device according to any one of claims 1 to 4, **characterized in that** the first (12) and/or second (14) beam former is designed as an optical system having a variable focal length (22).

6. The bending angle measuring device according to any one of claims 1 to 5, **characterized in that** the light source (4) is designed as an illuminant (6) that can be electrically controlled in a pulse-shaped manner.

7. The bending angle measuring device according to any one of claims 1 to 5, **characterized in that** the light source (4) is formed by an illuminant (6) and a first beam interrupter (7) is arranged in the illumination device (2) in the beam path (8).

8. The bending angle measuring device according to any one of claims 1 to 7, **characterized in that** a second beam interrupter (15) is arranged in the image capturing device (3) in the beam path (8) upstream of the image sensor (5).

9. The bending angle measuring device according to claim 7 or 8, **characterized in that** the first (7) and/or second beam interrupter (15) are/is formed by an electro-optical switch.

10. The bending angle measuring device according to any one of claims 1 to 8, **characterized in that** the image sensor (5) is formed for selectively detecting a single image or image segment.

11. The bending angle measuring device according to any one of claims 1 to 10, **characterized in that** the illumination device and image capturing device (3) are arranged in a common housing (10).

12. The bending angle measuring device according to claim 11, **characterized in that** a beam splitter (11) is arranged in the beam path (8) in the housing (10).

13. The bending angle measuring device according to claim 12, **characterized in that** the beam splitter (11) has a controllable optical directional characteristic.

14. The bending angle measuring device according to any one of claims 1 to 13, **characterized in that** the first beam interrupter (7) or the light source (4), and the second beam interrupter (15) or the image sensor (5), are connected to a timer (16).

15. The bending angle measuring device according to claim 14, **characterized in that** the timer (16) has a running time element via which the second beam interrupter (15) or the image sensor (5) is connected to the timer (16).

16. A method for determining a bending angle with a bending angle measuring device (1) according to any one of claims 1 to 15, wherein a light bundle is emitted from the light source (4) of the lighting device (2) along the beam path (8) to the image sensor (5) of the image capturing device (3), wherein a sheet metal as a workpiece (9) is situated in the beam path (8), for which workpiece the bending angle is to be determined,
wherein an image detected by the image sensor (5) is processed by the evaluation and analysis module (17) and the position of the sheet metal legs is determined in the processed image and therefrom the angle between the sheet metal legs is determined as the bending angle,
**characterized in that**
a light pulse (19) of the duration T_z is emitted from the light source (4) at the output time point t_0.

17. The method according to claim 16, **characterized in that** light of the beam path (8) is released for the duration T_z at the output time point t_0, or that the light source (4) is activated at the output time point t_0 and deactivated after the duration T_z.

18. The method according to any one of claims 16 or 17, **characterized in that** the run times t_0, T_z and t_c are predetermined by the timer (16), in particular that the light source (4) and the image sensor (5) are controlled by the timer.

19. The method according to any one of claims 16 or 18, **characterized in that** characteristic process data are transmitted by a machine controller to the timer (16), from which the pulse duration T_z and the detection time t_c are determined by the timer.

20. A bending machine, in particular press brake or swivel bending machine, with a bending angle measuring device (1),
wherein the bending machine has a bending tool arrangement comprising a machine-fixed lower tool and an upper tool movable relative thereto,
and wherein a sheet metal part to be formed is arranged in the bending tool arrangement and is bent along a bending line during the bending process, wherein the bending angle measuring device (1) is arranged laterally of the bending tool arrangement so that the beam path (8) is aligned parallel to the bending line,
**characterized in that**
the bending angle measuring device (1) is designed according to any one of claims 1 to 15.

21. The bending machine according to claim 20, **characterized in that** the bending tool arrangement comprises a lower and an upper tool, or a hold-down tool and a swivel cheek.

22. The bending machine according to claim 20 or 21, wherein the illumination device and image capturing device (3) of the bending angle measuring device (1) are arranged in a common housing (10), **characterized in that** the housing (10) is arranged in a lateral vicinity of the bending tool arrangement.

23. The bending machine according to claim 20 or 21, **characterized in that** the illumination device and image capturing device (3) of the bending angle measuring device (1) are arranged in opposite lateral vicinities of the bending tool arrangement.

## Revendications

1. Dispositif de mesure d'angle de pliage (1) comprenant
un dispositif d'éclairage (2) et un dispositif de capture d'image (3),
le dispositif d'éclairage (2) comprenant une source de lumière (4) et le dispositif de capture d'image (3) comprenant un capteur d'image (5), un chemin optique (8) étant réalisé entre la source de lumière (4) et le capteur d'image (5), un faisceau lumineux émis par la source de lumière (4) arrivant le long de ce chemin optique (8) à un capteur d'image (5),
dans le chemin optique (8), entre le dispositif d'éclairage (2) et le dispositif de capture d'image (3), une tôle à plier le long d'une ligne de pliage étant disposée en tant que pièce (9),
le chemin optique (8) étant parallèle à la ligne de pliage et
le dispositif d'éclairage (2) comprenant un premier dispositif de formation de faisceau (12) disposé dans le chemin optique (8) et
le dispositif de capture d'image (3) comprenant un deuxième dispositif de formation de faisceau (14) disposé dans le chemin optique (8) et
le capteur d'image (5) étant relié avec un module d'analyse (17) à qui fait partie du dispositif de mesure d'angle de pliage (1),
**caractérisé en ce que**
le faisceau lumineux émis à un moment d'émission t_0 par le dispositif d'éclairage (2) est formé comme une impulsion lumineuse (19) avec une phase claire de durée T_z,
et **en ce que** le capteur d'image (5) capture, à un moment de capture t_c une représentation d'une portion (24) de la pièce (9), le temps de capture d'une image individuelle étant inférieur ou égal au double de la durée T_z et
le module d'analyse (17) étant conçu pour traiter une image capturée par le capteur d'image (5), pour déterminer dans l'image traitée la position des branches de tôle et en déduire l'angle entre les branches de tôle en tant qu'angle de pliage.

2. Dispositif de mesure d'angle de pliage selon la revendication 1, **caractérisé en ce que** le moment de capture t_c est déterminée comme le temps de déplacement de l'impulsion lumineuse (19) de la source de lumière (4) vers la pièce (9) et de la pièce (9) vers le capteur d'image (5).

3. Dispositif de mesure d'angle de pliage selon l'une des revendications 1 ou 2, **caractérisé en ce que** la durée T_z est inférieur ou égal à 1 ns.

4. Dispositif de mesure d'angle de pliage selon l'une des revendications 1 à 3, **caractérisé en ce que** le premier (12) et/ou le deuxième dispositif de formation de faisceaux (14) est constitué d'une optique télécentrique.

5. Dispositif de mesure d'angle de pliage selon l'une des revendications 1 à 4, **caractérisé en ce que** le premier (12) et/ou le deuxième dispositif de formation de faisceaux (14) est constitué comme une optique avec une focale variable (22).

6. Dispositif de mesure d'angle de pliage selon l'une des revendications 1 à 5, **caractérisé en ce que** la source de lumière (4) est conçue comme un moyen d'éclairage (6) pouvant être commandé par des impulsions électriques.

7. Dispositif de mesure d'angle de pliage selon l'une des revendications 1 à 5, **caractérisé en ce que** la source de lumière (4) est constituée d'un moyen d'éclairage (6) et est, dans le dispositif d'éclairage (2), dans le chemin optique (8), est disposé un premier interrupteur de faisceaux (7).

8. Dispositif de mesure d'angle de pliage selon l'une des revendications 1 à 7, **caractérisé en ce que**, dans le dispositif de capture d'image (3), dans le chemin optique (8), avant le capteur d'image (5), est disposé un deuxième interrupteur de faisceaux (15).

9. Dispositif de mesure d'angle de pliage selon la revendication 7 ou 8, **caractérisé en ce que** le premier (7) et/ou le deuxième interrupteur de faisceaux (15) est constitué d'un commutateur électro-optique.

10. Dispositif de mesure d'angle de pliage selon l'une des revendications 1 à 8, **caractérisé en ce que** le capteur d'image (5) est conçu pour la capture sélective d'une image individuelle ou d'un segment d'image.

11. Dispositif de mesure d'angle de pliage selon l'une des revendications 1 à 10, **caractérisé en ce que** le dispositif d'éclairage et le dispositif de capture d'image (3) sont disposés dans un boîtier commun (10).

12. Dispositif de mesure d'angle de pliage selon la revendication 11, **caractérisé en ce que**, dans le boîtier (10), dans le chemin optique (8), est disposé un diviseur de faisceaux (11).

13. Dispositif de mesure d'angle de pliage selon la revendication 12, **caractérisé en ce que** le diviseur de faisceaux (11) présente une caractéristique de direction optique pouvant être contrôlée.

14. Dispositif de mesure d'angle de pliage selon l'une des revendications 1 à 13, **caractérisé en ce que** le premier interrupteur de faisceaux (7) ou la source de lumière (4) et le deuxième interrupteur de faisceaux (15) ou le capteur d'image (5) sont reliés avec un minuteur (16).

15. Dispositif de mesure d'angle de pliage selon la revendication 14, **caractérisé en ce que** le minuteur (16) comprend un élément de temps de déplacement par l'intermédiaire duquel le deuxième interrupteur de faisceaux (15) ou le capteur d'image (5) est relié avec le minuteur (16).

16. Procédé de détermination d'un angle de pliage avec un dispositif de mesure d'angle de pliage (1) selon l'une des revendications 1 à 15, un faisceau lumineux étant émis par la source de lumière (4) du dispositif d'éclairage (2) le long du chemin optique (8) vers le capteur d'image (5) du dispositif de capture d'image (3), dans le chemin optique (8) se trouvant une tôle sous la forme d'une pièce (9) pour laquelle l'angle de pliage est à déterminer,
le module d'analyse (17) traitant une image capturée par le capteur d'image (5) et, dans l'image traitée, la position des branches de tôle étant déterminée et l'angle entre les branches de tôle en étant déduite en tant qu'angle de pliage,
**caractérisé en ce que**
une impulsion lumineuse (19) de durée T_z est émise par la source de lumière (4) au moment d'émission t_0.

17. Procédé selon la revendication 16, **caractérisé en ce que**, le chemin optique (8) est libéré par le premier interrupteur de faisceaux au moment d'émission t_0 pendant la durée T_z ou **en ce que** la source de lumière (4) est activée au moment d'émission t_0 et désactivée après la durée T_z.

18. Procédé selon l'une des revendications 16 ou 17, **caractérisé en ce que** les temps t_0, T_z et t_c sont prédéterminés par le minuteur (16), plus particulièrement **en ce que** la source de lumière (4) et le capteur d'image (5) sont commandés par celui-ci.

19. Procédé selon l'une des revendications 16 à 18, **caractérisé en ce que** des données de process caractéristiques sont transmises par une commande de machine au minuteur (16), celui-ci en déduisant la durée d'impulsion T_z et le moment de capteur t_c.

20. Machine de pliage, plus particulièrement machine de pliage à matrice ou machine de pliage pivotante, avec un dispositif de mesure d'angle de pliage (1),
la machine de pliage comprenant une disposition d'outils de pliage constituée d'un outil inférieur solidaire de la machine et un outil supérieur mobile par rapport à celle-ci, et, dans la disposition d'outils de pliage, une pièce en tôle étant disposée, qui est pliée pendant l'exécution du formage par pliage le long d'une ligne de pliage,
le dispositif de mesure d'angle de pliage (1) étant disposé sur le côté de la disposition d'outils de pliage de façon à ce que le chemin optique (8) soit parallèle à la ligne de pliage,
**caractérisée en ce que**
le dispositif de mesure d'angle de pliage (1) est conçu selon l'une des revendications 1 à 15.

21. Machine de pliage selon la revendication 20, **caractérisée en ce que** la disposition d'outils de pliage comprend un outil inférieur et un outil supérieur ou un outil de maintien et une joue pivotante.

22. Machine de pliage selon la revendication 20 ou 21, le dispositif d'éclairage et le dispositif de capture d'image (3) du dispositif de mesure d'angle de pliage (1) sont disposés dans un boîtier commun (10), **caractérisée en ce que** le boîtier (10) est disposé dans une zone proche latérale de la disposition d'outils de pliage.

23. Machine de pliage selon la revendication 20 ou 21, **caractérisée en ce que** le dispositif d'éclairage et le dispositif de capture d'image (3) du dispositif de mesure d'angle de pliage (1) sont disposés dans des zones proches opposées de la disposition d'outils de pliage.
